# EUROPEAN PATENT APPLICATION

(11) **EP 4 124 020 A1**
(43) Date of publication of application: **25.01.2023**
(21) Application number: 21771156.3
(22) Date of filing: 09.03.2021
(51) Int. Cl.: H04N 5/235, H04N 5/232

(54) **EXPOSURE DATA ACQUISITION METHOD AND ELECTRONIC DEVICE**

(30) Priority: 16.03.2020 CN 202010181485
(71) Applicant: Vivo Mobile Communication Co., Ltd., Dongguan, Guangdong 523863 (CN)
(72) Inventor: LEI, Naice, Dongguan, Guangdong 523863 (CN)
(74) Representative: Raffay & Fleck
(86) International application number: PCT/CN2021/079654
(87) International publication number: WO 2021/185115

(57) **Abstract**

The present invention provides an exposure data acquisition method and an electronic device. The exposure data acquisition method comprises: determining a scan synchronization signal corresponding to a target region on a display screen of an electronic device; determining, according to the scan synchronization signal, a real-time screen-off region and movement parameter information of the real-time screen-off region; determining, according to pixels occupied by the real-time screen-off region, the movement parameter information, and pixels occupied by the target region, a coverage time period in which the real-time screen-off region continuously covers the target region, and a time interval between two coverage events; and controlling, according to the coverage time period and the time interval, a target photosensitive component in the electronic device to perform exposure, so as to obtain exposure data, wherein the target region is a region on the display screen corresponding to the target photosensitive component.

## Description

### CROSS-REFERENCE TO RELATED APPLICATIONS

This application claims priority to Chinese Patent Application No. 202010181485.4 filed in China on March 16, 2020, which is incorporated herein by reference in its entirety.

### TECHNICAL FIELD

The present invention relates to the technical field of electronic devices, and in particular, to a method for obtaining exposure data and an electronic device.

### BACKGROUND

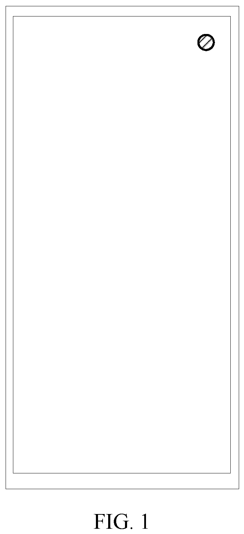

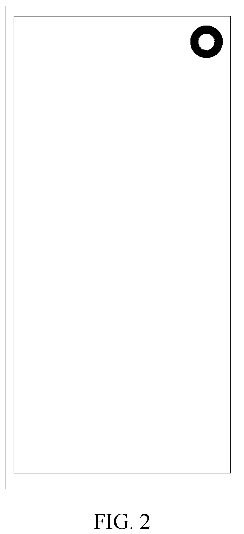

In order to increase the screen ratio, a water drop screen or a hole-digging screen is often used in current mobile terminals, that is, a space for the camera to receive light is reserved at the edge of the rectangular screen or in the screen area, as shown in FIG. 1 (in a case of not using a front-facing camera). Because the screen may emit light when taking pictures, in order to reduce the stray light generated by the screen from diffracting into the camera nearby, resulting in poor imaging effect, a specific width of black border is usually set outside a field angle of view (Field angle of view, Fov) of the camera to absorb the stray light from the screen, as shown in FIG. 2 (in a case of using the front-facing camera).

However, setting the black border on the screen to absorb the stray light may occupy the usable area of the screen when taking selfies by using the front-facing camera, and the space for displaying the image is occupied more. In addition, the widening of the black border also reduces the user experience and the aesthetic degree.

It can be seen from the above that the exposure realization solution of the photosensitive device in the existing electronic device has the problem of wasting the usable area of the screen.

### SUMMARY

The present invention is intended to provide a method for obtaining exposure data and an electronic device, so as to solve the problem of wasting the usable area of the screen in the exposure realization solution of the photosensitive device of the electronic device in the prior art.

To resolve the foregoing technical problem, the present invention is implemented as follows:

According to a first aspect, an embodiment of the present invention provides a method for obtaining exposure data, applied to an electronic device and including:
determining a scan synchronization signal corresponding to a target area on a display screen of the electronic device;
determining, based on the scan synchronization signal, a real-time screen-off area and movement parameter information of the real-time screen-off area;
determining, based on pixels occupied by the real-time screen-off area, the movement parameter information, and pixels occupied by the target area, a coverage duration for the real-time screen-off area to continuously cover the target area and a time interval between two coverages; and
controlling, based on the coverage duration and the time interval, a target photosensitive component in the electronic device to be exposed, so as to obtain exposure data, where
the target area is an area corresponding to the target photosensitive component on the display screen.

According to a second aspect, an embodiment of the present invention further provides an electronic device, including:
a first determining module, configured to determine a scan synchronization signal corresponding to a target area on a display screen of the electronic device;
a second determining module, configured to determine, based on the scan synchronization signal, a real-time screen-off area and movement parameter information of the real-time screen-off area;
a third determining module, configured to determine, based on pixels occupied by the real-time screen-off area, the movement parameter information, and pixels occupied by the target area, a coverage duration for the real-time screen-off area to continuously cover the target area and a time interval between two coverages; and
a first control module, configured to control, based on the coverage duration and the time interval, a target photosensitive component in the electronic device to be exposed, so as to obtain exposure data, where
the target area is an area corresponding to the target photosensitive component on the display screen.

According to a third aspect, an embodiment of the present invention further provides an electronic device, including a processor, a memory, and a computer program stored in the memory and executable on the processor, where when the computer program is executed by the processor, steps of the method for obtaining exposure data are implemented.

According to a fourth aspect, an embodiment of the present invention further provides a computer-readable storage medium, where the computer-readable storage medium stores a computer program, and when the computer program is executed by a processor, steps of the method for obtaining exposure data are implemented.

In the embodiments of the present invention, a scan synchronization signal corresponding to a target area on a display screen of the electronic device is determined; it is determined, based on the scan synchronization signal, a real-time screen-off area and movement parameter information of the real-time screen-off area; it is determined, based on pixels occupied by the real-time screen-off area, the movement parameter information, and pixels occupied by the target area, a coverage duration for the real-time screen-off area to continuously cover the target area and a time interval between two coverages; and it is controlled, based on the coverage duration and the time interval, a target photosensitive component in the electronic device to be exposed, so as to obtain exposure data, where the target area is an area corresponding to the target photosensitive component on the display screen. Therefore, the real-time off-screen area formed by the scanning of the display screen can be used to accurately control the photosensitive component to be exposed. At this time, the periphery of the photosensitive component is black, optical crosstalk will not occur, and data collection of the photosensitive component will not be affected; in addition, because the scanning rate is fast enough, the human eye cannot detect the black periphery, and the black border cannot be seen intuitively, which improves the user experience; and in this solution, there is no need to additionally set an area around the hole of the photosensitive component to black, which ensures the effective use of the screen area, and the problem of wasting the usable area of the screen in the exposure realization solution of the photosensitive device of the electronic device in the prior art is well solved.

### BRIEF DESCRIPTION OF DRAWINGS

FIG. 1 is a schematic diagram 1 of a screen of a mobile terminal in the prior art;
FIG. 2 is a schematic diagram 2 of a screen of a mobile terminal in the prior art;
FIG. 3 is a schematic flowchart of a method for obtaining exposure data according to an embodiment of the present invention;
FIG. 4 is a schematic diagram of a mobile terminal according to an embodiment of the present invention;
FIG. 5 is a schematic diagram of a timing gap relationship between a display screen on/off state and a scan synchronization signal according to an embodiment of the present invention;
FIG. 6 is a schematic diagram of an exposure-off state of a camera according to an embodiment of the present invention;
FIG. 7 is a schematic diagram of an exposure-on state of a camera according to an embodiment of the present invention;
FIG. 8 is a schematic diagram of a specific application process of a method for obtaining exposure data according to an embodiment of the present invention;
FIG. 9 is a schematic diagram of an implementation system framework of a method for obtaining exposure data according to an embodiment of the present invention;
FIG. 10 is a schematic structural diagram 1 of an electronic device according to an embodiment of the present invention; and
FIG. 11 is a schematic structural diagram 2 of an electronic device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

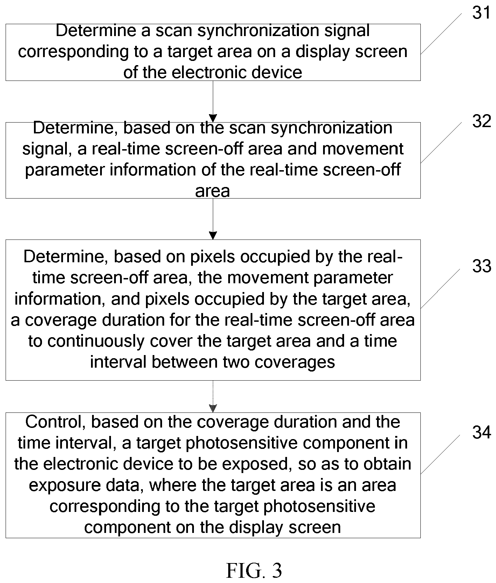

As for the problem of wasting the usable area of the screen in the exposure realization solution of the photosensitive device of the electronic device in the prior art, the present invention provides a method for obtaining exposure data, applied to an electronic device, and as shown in FIG. 3, the method includes the following steps.

Step 31: Determine a scan synchronization signal corresponding to a target area on a display screen of the electronic device.

The scan synchronization signal may be a line scan signal, a column scan signal, or an area scan signal, which is not limited herein.

The target area refers to an area on the display screen used for the target photosensitive component described below to collect data.

Step 32: Determine, based on the scan synchronization signal, a real-time screen-off area and movement parameter information of the real-time screen-off area.

Specifically, it may be determined, based on a scan gap of the scan synchronization signal, the real-time screen-off area and the movement parameter information of the real-time screen-off area.

The real-time screen-off area may be in a shape of a strip, or a shape such as a rectangle, for example, the target area and other areas are divided into two rectangles. However, this is not limited thereto.

The movement parameter information may include information such as a movement speed.

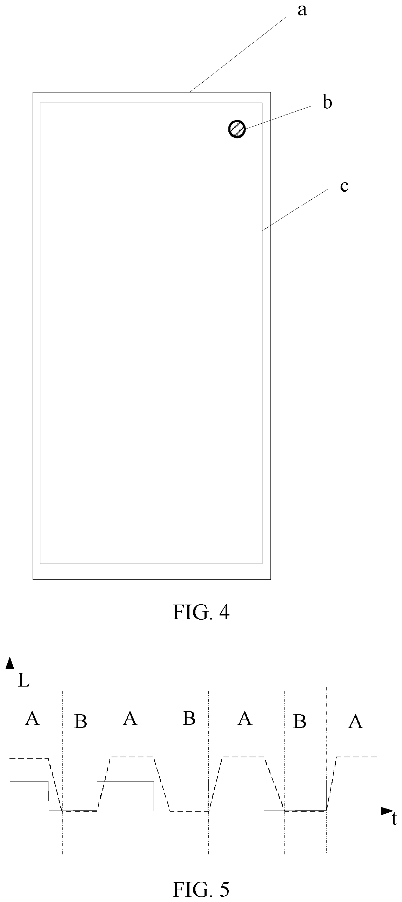

There is a specific timing gap relationship between the on-off state of the display screen (specifically, the real-time screen-off area) and the scan synchronization signal. Specifically, a time when the scan synchronization signal is in a low state (namely, a low electrical level, as shown in FIG. 5, a dashed line corresponding to the scan synchronization signal on the time t axis) overlaps with a time when the display screen is in an off state (as shown in FIG. 5, a solid line corresponding to the state of the display screen on the time t axis).

Step 33: Determine, based on pixels occupied by the real-time screen-off area, the movement parameter information, and pixels occupied by the target area, a coverage duration for the real-time screen-off area to continuously cover the target area and a time interval between two coverages.

"Cover the target area" may refer to covering all or part of the target area; and "two coverages" may refer to two adjacent coverages or two non-adjacent coverages, which is not limited herein.

Step 34: Control, based on the coverage duration and the time interval, a target photosensitive component in the electronic device to be exposed, so as to obtain exposure data, where the target area is an area corresponding to the target photosensitive component on the display screen.

The target photosensitive component may be any under-screen photosensitive device, such as an under-screen camera.

Considering that the exposure time of the photosensitive component may be appropriately adjusted based on the ambient brightness, in this embodiment of the present invention, the controlling, based on the coverage duration and the time interval, a target photosensitive component in the electronic device to be exposed, so as to obtain exposure data includes: controlling, based on the coverage duration, the time interval, and a target exposure duration required for the target photosensitive component, the target photosensitive component to be exposed, so as to obtain the exposure data.

In the method for obtaining exposure data according to the embodiments of the present invention, a scan synchronization signal corresponding to a target area on a display screen of the electronic device is determined; it is determined, based on the scan synchronization signal, a real-time screen-off area and movement parameter information of the real-time screen-off area; it is determined, based on pixels occupied by the real-time screen-off area, the movement parameter information, and pixels occupied by the target area, a coverage duration for the real-time screen-off area to continuously cover the target area and a time interval between two coverages; and it is controlled, based on the coverage duration and the time interval, a target photosensitive component in the electronic device to be exposed, so as to obtain exposure data, where the target area is an area corresponding to the target photosensitive component on the display screen. Therefore, the real-time off-screen area formed by the scanning of the display screen can be used to accurately control the photosensitive component to be exposed. At this time, the periphery of the photosensitive component is black, optical crosstalk will not occur, and data collection of the photosensitive component will not be affected; in addition, because the scanning rate is fast enough, the human eye cannot detect the black periphery, and the black border cannot be seen intuitively, which improves the user experience; and in this solution, there is no need to additionally set an area around the hole of the photosensitive component to black, which ensures the effective use of the screen area, and the problem of wasting the usable area of the screen in the exposure realization solution of the photosensitive device of the electronic device in the prior art is well solved.

The controlling, based on the coverage duration, the time interval, and a target exposure duration required for the target photosensitive component, the target photosensitive component to be exposed, so as to obtain the exposure data includes: determining, in a case that the target exposure duration is greater than the coverage duration, a quantity of target exposures of the target photosensitive component based on the target exposure duration and the coverage duration; and controlling, based on the quantity of target exposures, the target photosensitive component to be exposed, so as to obtain the exposure data, where a total exposure duration of the target photosensitive component is not less than the target exposure duration.

This can ensure that exposure data can be obtained normally in a low-brightness environment and a long exposure time, so as to prevent the black screen time (namely, the coverage time) from being too short and unable to meet the exposure time requirement.

Specifically, the controlling, based on the quantity of target exposures, the target photosensitive component to be exposed, so as to obtain the exposure data includes: controlling, based on the quantity of target exposures, the target photosensitive component to be exposed; and obtaining the exposure data after the last exposure; or controlling, based on the quantity of target exposures, the target photosensitive component to be exposed, and outputting, after each exposure, sub data obtained in this exposure; and synthesizing, after the last exposure, the sub data to obtain the exposure data.

In other words, in the embodiments of the present invention, in a case that the target exposure duration is greater than the coverage duration, two specific implementation solutions are provided to obtain normal exposure data: a first method is to control the target photosensitive component to be exposed based on a quantity of target exposures (at least two exposures are performed), and output data once as exposure data until a total exposure duration is not less than the target exposure duration; a second method is to control the target photosensitive component to be exposed based on the quantity of target exposures (at least two exposures are performed), and output data for each exposure, and finally synthesize the data output for each exposure to obtain the exposure data.

In this embodiment of the present invention, the determining, based on pixels occupied by the real-time screen-off area, the movement parameter information, and pixels occupied by the target area, a coverage duration for the real-time screen-off area to continuously cover the target area and a time interval between two coverages includes: obtaining a reference area based on the target area; and determining, based on the pixels occupied by the real-time screen-off area, the movement parameter information, and reference pixels occupied by the reference area, a coverage duration for the real-time screen-off area to continuously and completely cover the reference area and a time interval between two coverages, where the reference area is larger than the target area, and the reference area is smaller than the real-time screen-off area.

In other words, the target area used to determine the coverage duration is expanded, and it is determined, based on a size of the expanded target area and a size of the real-time screen-off area, each optimal exposure duration (the optimal exposure duration is less than the coverage duration); so as to ensure that exposure is performed in a time period shorter than the coverage duration (exposure is performed in an area narrower than the real-time screen-off area), which avoids that a distance between an edge of the real-time screen-off area and the target area is too small, and thus, the exposure effect is affected.

An area of the reference area (the area may be specifically reflected in a quantity of occupied pixels) is greater than an area of the target area, and the reference area includes the target area, and the area of the reference area is smaller than an area of the real-time screen-off area.

The method for obtaining the exposure data provided in the embodiments of the present invention is further described below. For example, the electronic device is a mobile terminal, the target photosensitive component is a front-facing camera, the display screen is a display screen with a hole in the front-facing camera, the scan synchronization signal is a line scan synchronization signal, and the scan gap is a line scan gap.

As for the foregoing technical problems, an embodiment of the present invention provides a method for obtaining exposure data, so that when a front-facing camera is used, a preview black border does not need to be widened, and the brightness interference of the screen can be removed, so as to improve both user experience and appearance performance. It can also be understood that the purpose of this solution is to reduce the impact of light leakage in the hole area of the screen on the camera, so that there is no need to additionally set an area around the hole of the camera to black when using the camera; which involves:
The camera is started for exposure by using the coverage duration and the time interval of the camera that are determined based on a line refresh gap of the screen (namely, the foregoing line scan gap); at this time, the periphery of the camera is black, optical crosstalk will not occur, and it will not affect the camera to take pictures. In addition, because a refresh rate of screen lines is fast enough, the human eye cannot detect the existence of black, and no black borders can be seen intuitively, so that the optical crosstalk problem of the pole-screen camera can be solved more thoroughly. Moreover, because the line refresh time of the screen is relatively short, and the exposure of the camera also needs some time, it is necessary to add a line refresh synchronization signal (namely, the line scan synchronization signal) to the camera, so that the camera can be accurately exposed in the real-time screen-off area.

Specifically, the solution provided in the embodiments of the present invention involves the following parts.

Part 1, in a mobile terminal with a front-facing camera hole in a display screen, the line scan synchronization signal of the display screen is transmitted to the camera, the camera end receives the line synchronization signal, and adjusts a corresponding exposure timing to ensure that the camera takes pictures within the coverage duration brought by the line scan, so that the screen display does not interfere with the lighting effect of the camera, and the black border of the camera hole can be minimized.

Part 2, the schematic diagram of the mobile terminal is shown in FIG. 4, including an outer frame a of the entire camera, a screen hole b, and a screen c.

Part 3, in the display screen of the mobile terminal described in the part 1, at the same time of displaying the line scan, the synchronization signal is correspondingly output based on a display state of a line position where the screen hole position is located, and this synchronization signal provides a time reference for the exposure of the camera; as shown below in FIG. 5:
The dotted line represents the display state of the screen in the hole area, high represents on, low represents off, and the solid line represents the output effect of the synchronous electrical signal, which has a specific timing gap relationship with the on-off of the screen, not necessarily as shown in FIG 5, in which switch of the on-off state of the screen varies with switch of the high-low state of the synchronization signal (namely, the high electrical level and the low electrical level). An order of occurrence thereof can be adjusted (it can also be understood as adjusting for the real-time screen-off area) to avoid the effect of the system control delay.

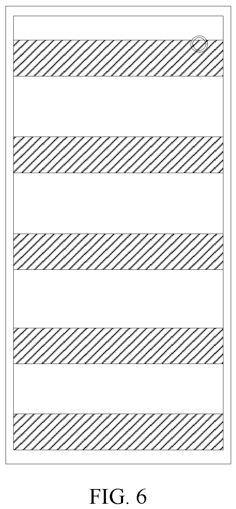

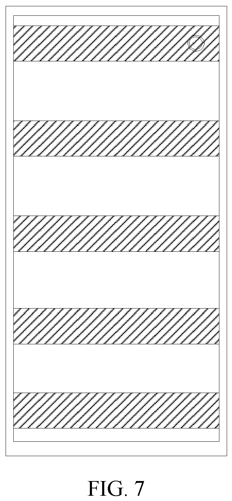

Part 4, an area A in FIG. 5 represents a time slot when the optical crosstalk occurs between the screen hole and the screen light, and an area B represents a non-optical crosstalk state of the screen hole, that is, a time slot when the optical crosstalk does not occur between the screen hole and the screen light (corresponding to a coverage time corresponding to the coverage duration), and this time period may be used to perform the exposure action of the camera; as shown in FIG. 6 and FIG. 7: FIG. 6 shows an exposure-off state of the camera (corresponding to a time outside the coverage time), FIG. 7 shows a state in which the camera can be exposed (corresponding to the coverage time), and an area filled with section lines in FIG. 6 and FIG. 7 is the real-time screen-off area.

It is noted herein that in this embodiment of the present invention, the refresh (namely, scan) may be line refresh, column refresh, or partition of the screen. A refresh rate of the first area including the camera may be different from refresh rates of other areas (the refresh rates can be different all the time, or the refresh rates of the two areas are different when the camera is used). In addition, this solution can also be applied to under-screen cameras and other under-screen photosensitive devices, which is not limited herein.

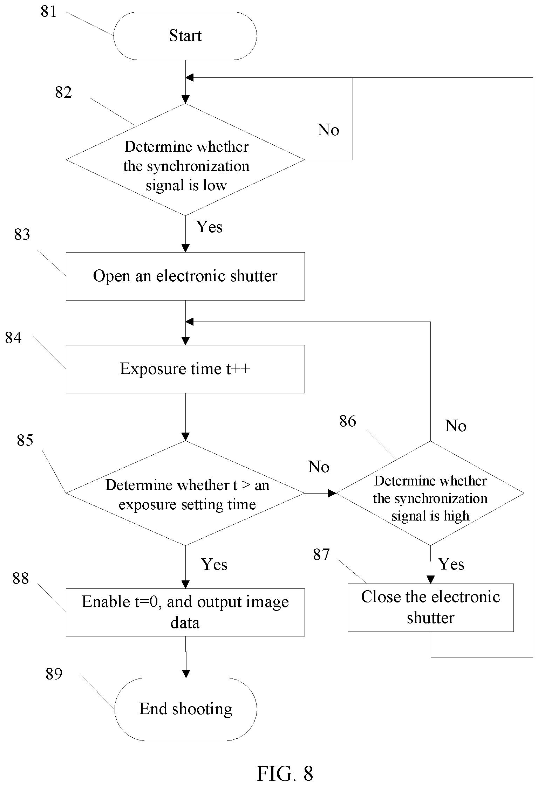

Part 5, because the exposure time of the camera may be appropriately adjusted based on the ambient brightness to ensure the photography effect. For example, in a low-brightness environment, the exposure time is relatively long, but the black displaying time of the screen (namely, the coverage duration) is relatively short, which cannot meet the requirements of the exposure duration. At this time, a duration of the low electrical level (or the high electrical level) of the synchronization signal is counted, when one time of the electrical level cannot meet the exposure duration, the electronic shutter of the camera is closed to wait for the screen to enter an off-state window for the second time (namely, a time that the screen displays black for the second time), then the electronic shutter (exposure time accumulation) is opened to ensure that the exposure time of each photo-taking process meets the set requirements. Specifically, an exposure logic state of the camera may be shown in FIG. 8, including:
Step 81: Start.
Step 82: Determine whether the synchronization signal is low (namely, whether the synchronization signal is at a low electrical level), if so, go to step 83, or if not, proceed to step 82.
Step 83: Open an electronic shutter.
Step 84: Accumulate the exposure time t (namely, t++).
Step 85: Determine whether t is greater than an exposure setting time (namely, the foregoing target exposure duration), that is, determine whether t > the exposure setting time is established; if so, go to step 88, or if not, go to step 86.
Step 86: Determine whether the synchronization signal is high (namely, whether the synchronization signal is at a high electrical level), if so, go to step 87, or if not, return to step 84.
Step 87: Close the electronic shutter, and return to step 82.
Step 88: Clear t (namely, t=0), and output image data.
Step 89: End shooting.

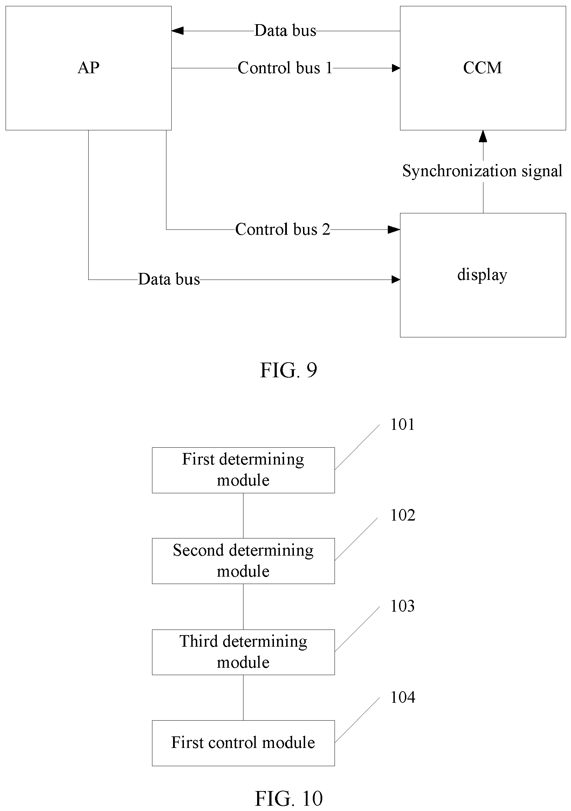

Part 6, the implementation system framework of the solution provided in the embodiments of the present invention may be as shown in FIG. 9, including: an application processor (Application Processor, AP), a complementary metal oxide semiconductor (Complementary Metal Oxide Semiconductor, CMOS) camera module Group (Camera Compact Module, CCM), and a display.

The AP communicates with the CCM via a data bus and a control bus 1, the AP communicates with the display via the data bus and the control bus 2, and the display sends the synchronization signal to the CCM.

Specifically, as a signal receiver of the system, the AP controls display content, brightness, and the like of a display screen in the display; when receiving a command to start the camera, the AP turns on the camera via the control bus, and receives content of the camera via the data bus, and transmits the content to the display screen for displaying.

Part 7, as mentioned in part 5, when the necessary exposure time (namely, the target exposure duration) is longer than the black displaying time of the screen (namely, the coverage duration), by suspending the exposure, when the time that the screen displays black for the second time arrives, the exposure is performed again to ensure the exposure time length of each photo-taking process. In addition, it may be a single short exposure by using the black displaying time of the screen, and images are output. Images captured at two or more times of displaying black on the screen before and after are used for multi-frame synthesis to ensure the photosensitive amount of the photo, thereby ensuring the photography effect.

The exposure solution in part 5 is to output all the data directly after the last exposure as the exposure data; and the exposure solution in this part is to output data after each exposure, and finally synthesize the data as the exposure data.

It can be seen from the above that the solution provided in the embodiments of the present invention can realize: in a mobile terminal with a camera light passing hole in the display area of the screen, the black border at the edge of the hole can be smaller, and the appearance can be beautified. In addition, when taking pictures, it is completely free from the interference of diffracted stray light from the screen, which can improve both the performance and the appearance.

An embodiment of the present invention further provides an electronic device, as shown in FIG. 10, including:
a first determining module 101, configured to determine a scan synchronization signal corresponding to a target area on a display screen of the electronic device;
a second determining module 102, configured to determine, based on the scan synchronization signal, a real-time screen-off area and movement parameter information of the real-time screen-off area;
a third determining module 103, configured to determine, based on pixels occupied by the real-time screen-off area, the movement parameter information, and pixels occupied by the target area, a coverage duration for the real-time screen-off area to continuously cover the target area and a time interval between two coverages; and
a first control module 104, configured to control, based on the coverage duration and the time interval, a target photosensitive component in the electronic device to be exposed, so as to obtain exposure data, where
the target area is an area corresponding to the target photosensitive component on the display screen.

In the electronic device according to the embodiments of the present invention, a scan synchronization signal corresponding to a target area on a display screen of the electronic device is determined; it is determined, based on the scan synchronization signal, a real-time screen-off area and movement parameter information of the real-time screen-off area; it is determined, based on pixels occupied by the real-time screen-off area, the movement parameter information, and pixels occupied by the target area, a coverage duration for the real-time screen-off area to continuously cover the target area and a time interval between two coverages; and it is controlled, based on the coverage duration and the time interval, a target photosensitive component in the electronic device to be exposed, so as to obtain exposure data, where the target area is an area corresponding to the target photosensitive component on the display screen. Therefore, the real-time off-screen area formed by the scanning of the display screen can be used to accurately control the photosensitive component to be exposed. At this time, the periphery of the photosensitive component is black, optical crosstalk will not occur, and data collection of the photosensitive component will not be affected; in addition, because the scanning rate is fast enough, the human eye cannot detect the black periphery, and the black border cannot be seen intuitively, which improves the user experience; and in this solution, there is no need to additionally set an area around the hole of the photosensitive component to black, which ensures the effective use of the screen area, and the problem of wasting the usable area of the screen in the exposure realization solution of the photosensitive device of the electronic device in the prior art is well solved.

The first control module includes a first control submodule, configured to control, based on the coverage duration, the time interval, and a target exposure duration required for the target photosensitive component, the target photosensitive component to be exposed, so as to obtain the exposure data.

Specifically, the first control submodule includes: a first determining unit, configured to: determine, in a case that the target exposure duration is greater than the coverage duration, a quantity of target exposures of the target photosensitive component based on the target exposure duration and the coverage duration; and a first control unit, configured to control, based on the quantity of target exposures, the target photosensitive component to be exposed, so as to obtain the exposure data, where a total exposure duration of the target photosensitive component is not less than the target exposure duration.

More specifically, the first control unit includes: a first control subunit, configured to control, based on the quantity of target exposures, the target photosensitive component to be exposed; a first processing subunit, configured to obtain the exposure data after the last exposure; or a second processing subunit, configured to: control, based on the quantity of target exposures, the target photosensitive component to be exposed, and output, after each exposure, sub data obtained in this exposure; and a third processing subunit, configured to synthesize, after the last exposure, the sub data to obtain the exposure data.

In this embodiment of the present invention, the third determining module includes: a first processing submodule, configured to obtain a reference area based on the target area; and a first determining submodule, configured to determine, based on the pixels occupied by the real-time screen-off area, the movement parameter information, and reference pixels occupied by the reference area, a coverage duration for the real-time screen-off area to continuously and completely cover the reference area and a time interval between two coverages, where the reference area is larger than the target area, and the reference area is smaller than the real-time screen-off area.

The electronic device provided in this embodiment of the present invention can implement the processes implemented by the electronic device in the method embodiment in FIG. 1 to FIG. 9. To avoid repetition, details are not described herein again.

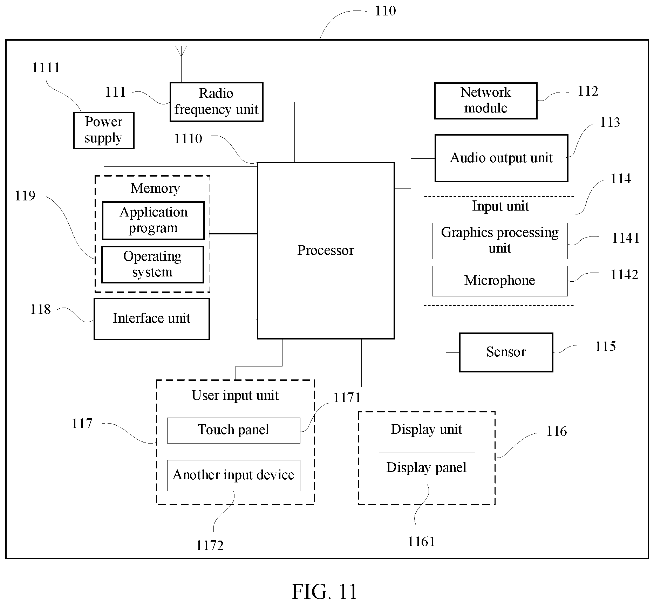

FIG. 11 is a schematic structural diagram of hardware of an electronic device implementing the embodiments of the present invention. The electronic device 110 includes but is not limited to: a radio frequency unit 111, a network module 112, an audio output unit 113, an input unit 114, a sensor 115, a display unit 116, a user input unit 117, an interface unit 118, a memory 119, a processor 1110, a power supply 1111, and other components. A person skilled in the art may understand that a structure of the electronic device shown in FIG. 11 constitutes no limitation on the electronic device, and the electronic device may include more or fewer components than those shown in the figure, or have a combination of some components, or have a different component arrangement. In this embodiment of the present invention, the electronic device includes but is not limited to a mobile phone, a tablet computer, a notebook computer, a palmtop computer, an in-vehicle terminal, a wearable device, a pedometer, and the like.

The processor 1110 is configured to: determine a scan synchronization signal corresponding to a target area on a display screen of the electronic device; determine, based on the scan synchronization signal, a real-time screen-off area and movement parameter information of the real-time screen-off area; determine, based on pixels occupied by the real-time screen-off area, the movement parameter information, and pixels occupied by the target area, a coverage duration for the real-time screen-off area to continuously cover the target area and a time interval between two coverages; and control, based on the coverage duration and the time interval, a target photosensitive component in the electronic device to be exposed, so as to obtain exposure data, where the target area is an area corresponding to the target photosensitive component on the display screen.

In the embodiments of the present invention, a scan synchronization signal corresponding to a target area on a display screen of the electronic device is determined; it is determined, based on the scan synchronization signal, a real-time screen-off area and movement parameter information of the real-time screen-off area; it is determined, based on pixels occupied by the real-time screen-off area, the movement parameter information, and pixels occupied by the target area, a coverage duration for the real-time screen-off area to continuously cover the target area and a time interval between two coverages; and it is controlled, based on the coverage duration and the time interval, a target photosensitive component in the electronic device to be exposed, so as to obtain exposure data, where the target area is an area corresponding to the target photosensitive component on the display screen. Therefore, the real-time off-screen area formed by the scanning of the display screen can be used to accurately control the photosensitive component to be exposed. At this time, the periphery of the photosensitive component is black, optical crosstalk will not occur, and data collection of the photosensitive component will not be affected; in addition, because the scanning rate is fast enough, the human eye cannot detect the black periphery, and the black border cannot be seen intuitively, which improves the user experience; and in this solution, there is no need to additionally set an area around the hole of the photosensitive component to black, which ensures the effective use of the screen area, and the problem of wasting the usable area of the screen in the exposure realization solution of the photosensitive device of the electronic device in the prior art is well solved.

Optionally, the processor 1110 is specifically configured to control, based on the coverage duration, the time interval, and a target exposure duration required for the target photosensitive component, the target photosensitive component to be exposed, so as to obtain the exposure data.

Optionally, the processor 1110 is specifically configured to: determine, in a case that the target exposure duration is greater than the coverage duration, a quantity of target exposures of the target photosensitive component based on the target exposure duration and the coverage duration; and control, based on the quantity of target exposures, the target photosensitive component to be exposed, so as to obtain the exposure data, where a total exposure duration of the target photosensitive component is not less than the target exposure duration.

Optionally, the processor 1110 is specifically configured to: control, based on the quantity of target exposures, the target photosensitive component to be exposed; and obtain the exposure data after the last exposure; or control, based on the quantity of target exposures, the target photosensitive component to be exposed, and output, after each exposure, sub data obtained in this exposure; and synthesize, after the last exposure, the sub data to obtain the exposure data.

Optionally, the processor 1110 is specifically configured to: obtain a reference area based on the target area; and determine, based on the pixels occupied by the real-time screen-off area, the movement parameter information, and reference pixels occupied by the reference area, a coverage duration for the real-time screen-off area to continuously and completely cover the reference area and a time interval between two coverages, where the reference area is larger than the target area, and the reference area is smaller than the real-time screen-off area.

It should be understood that, in this embodiment of the present invention, the radio frequency unit 111 may be configured to receive and send information or receive and send a signal in a call process. Specifically, after downlink data from a base station is received, the processor 1110 processes the downlink data. In addition, uplink data is sent to the base station. Usually, the radio frequency unit 111 includes but is not limited to an antenna, at least one amplifier, a transceiver, a coupler, a low noise amplifier, a duplexer, and the like. In addition, the radio frequency unit 111 may communicate with a network and another device through a wireless communications system.

The electronic device provides users with wireless broadband Internet access through the network module 112, for example, helps users receive and send e-mails, browse web pages, and access streaming media.

The audio output unit 113 may convert audio data received by the radio frequency unit 111 or the network module 112 or stored in the memory 119 into an audio signal and output the audio signal as a sound. Moreover, the audio output unit 113 may further provide audio output related to a specific function performed by the electronic device 110 (for example, a call signal receiving sound and a message receiving sound). The audio output unit 113 includes a speaker, a buzzer, a telephone receiver, and the like.

The input unit 114 is configured to receive an audio signal or a video signal. The input unit 114 may include a graphics processing unit (Graphics Processing Unit, GPU) 1141 and a microphone 1142. The graphics processing unit 1141 processes image data of a static picture or a video obtained by an image capture apparatus (such as a camera) in a video capture mode or an image capture mode. A processed image frame may be displayed on the display unit 116. The image frame processed by the graphics processing unit 1141 may be stored in the memory 119 (or another storage medium) or sent via the radio frequency unit 111 or the network module 112. The microphone 1142 may receive a sound and can process such sound into audio data. Processed audio data may be converted, in a call mode, into a format that can be sent to a mobile communication base station by using the radio frequency unit 111 for output.

The electronic device 110 further includes at least one sensor 115 such as a light sensor, a motion sensor, and another sensor. Specifically, the light sensor includes an ambient light sensor and a proximity sensor. The ambient light sensor may adjust luminance of the display panel 1161 based on brightness of ambient light. The proximity sensor may turn off the display panel 1161 and/or backlight when the electronic device 110 moves to an ear. As a motion sensor, an accelerometer sensor may detect magnitude of acceleration in various directions (usually three axes), may detect magnitude and the direction of gravity when stationary, may be configured to identify electronic device postures (such as switching between a landscape mode and a portrait mode, related games, and magnetometer posture calibration), may perform functions related to vibration identification (such as a pedometer and a knock), and the like. The sensor 115 may further include a fingerprint sensor, a pressure sensor, an iris sensor, a molecular sensor, a gyroscope, a barometer, a hygrometer, a thermometer, an infrared sensor, or the like. Details are not described herein again.

The display unit 116 is configured to display information input by a user or information provided for a user. The display unit 116 may include a display panel 1161, and the display panel 1161 may be configured in a form of a liquid crystal display (Liquid Crystal Display, LCD), an organic light-emitting diode (Organic Light-Emitting Diode, OLED), or the like.

The user input unit 117 may be configured to: receive entered digital or character information, and generate key signal input related to a user setting and function control of the electronic device. Specifically, the user input unit 117 includes a touch panel 1171 and another input device 1172. The touch panel 1171, also called a touch screen, may collect touch operation on or near the touch panel by users (for example, operation on the touch panel 1171 or near the touch panel 1171 by fingers or any suitable objects or accessories such as a touch pen by the users). The touch panel 1171 may include two parts: a touch detection apparatus and a touch controller. The touch detection apparatus detects a touch position of the user, detects a signal brought by the touch operation, and sends the signal to the touch controller. The touch controller receives touch information from the touch detection apparatus, converts the touch information into touch point coordinates, sends the touch point coordinates to the processor 1110, and receives and executes a command sent by the processor 1110. In addition, the touch panel 1171 may be implemented by using a plurality of types such as a resistive type, a capacitive type, an infrared ray, and a surface acoustic wave. The user input unit 117 may include other input devices 1172 in addition to the touch panel 1171. Specifically, the another input device 1172 may include but is not limited to: a physical keyboard, a function button (such as a volume control button, a switch button), a trackball, a mouse, and a joystick, which is not described herein.

Further, the touch panel 1171 may cover the display panel 1161. After detecting the touch operation on or near the touch panel 1171, the touch panel 1161 transmits the touch operation to the processor 1110 to determine a type of a touch event, and then the processor 1110 provides corresponding visual output on the display panel 1161 based on the type of the touch event. Although in FIG. 11, the touch panel 1171 and the display panel 1161 are configured as two independent components to implement input and output functions of the electronic device, in some embodiments, the touch panel 1171 and the display panel 1161 can be integrated to implement the input and output functions of the electronic device. Details are not limited herein.

The interface unit 118 is an interface for connecting an external apparatus with the electronic device 110. For example, the external apparatus may include a wired or wireless headset port, an external power supply (or battery charger) port, a wired or wireless data port, a storage card port, a port configured to connect to an apparatus having an identification module, an audio input/output (I/O) port, a video I/O port, a headset port, and the like. The interface unit 118 may be configured to receive input (for example, data information and power) from an external apparatus and transmit the received input to one or more elements in the electronic device 110 or may be configured to transmit data between the electronic device 110 and an external apparatus.

The memory 119 may be configured to store a software program and various data. The memory 119 may mainly include a program storage area and a data storage area. The program storage area may store an operating system, an application required by at least one function (for example, a sound play function or an image display function), and the like. The data storage area may store data (for example, audio data or an address book) or the like created based on use of the mobile phone. In addition, the memory 119 may include a high-speed random access memory, and may further include a nonvolatile memory, for example, at least one magnetic disk storage device, a flash storage device, or another non-volatile solid-state storage device.

The processor 1110 is a control center of the electronic device, connects all parts of the entire electronic device by using various interfaces and lines, and performs various functions of the electronic device and data processing by running or executing a software program and/or a module that are/is stored in the memory 119 and by invoking data stored in the memory 119, to overall monitor the electronic device. Optionally, the processor 1110 may include one or more processing units. Preferably, an application processor and a modem processor may be integrated into the processor 1110. The application processor mainly processes an operating system, a user interface, an application, and the like. The modem processor mainly processes wireless communications. It can be understood that, alternatively, the modem processor may not be integrated into the processor 1110.

The electronic device 110 may further include a power supply 1111 (such as a battery) supplying power to each component. Preferably, the power supply 1111 may be logically connected to the processor 1110 by using a power management system, so as to implement functions such as charging management, discharging management and power consumption management by using the power management system.

In addition, the electronic device 110 includes some function modules not shown, and details are not described herein.

Preferably, an embodiment of the present invention further provides an electronic device, including a processor 1110, a memory 119, and a computer program stored in the memory 119 and executable on the processor 1110. When the computer program is executed by the processor 1110, the foregoing processes of the method embodiment for obtaining exposure data are implemented, and a same technical effect can be achieved. To avoid repetition, details are not described herein again.

An embodiment of the present invention further provides a computer-readable storage medium. The computer-readable storage medium stores a computer program. The computer program implements, when executed by a processor, each process of the method embodiment for obtaining exposure data, and a same technical effect can be achieved. To avoid repetition, details are not described herein again. The computer-readable storage medium includes a read-only memory (Read-Only Memory, ROM), a random access memory (Random Access Memory, RAM), a magnetic disk, an optical disc, or the like.

An embodiment of the present invention further provides a computer program product. The computer program product is executed by at least one processor to implement each process of the method embodiment for obtaining exposure data, and a same technical effect can be achieved. To avoid repetition, details are not described herein again.

An embodiment of the present invention further provides an electronic device for executing each process of the method embodiment for obtaining exposure data.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In the absence of more restrictions, an element defined by the statement "including a..." does not exclude another same element in a process, method, article, or apparatus that includes the element.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of the present invention essentially or the part contributing to the prior art may be implemented in a form of a software product. The computer software product is stored in a storage medium (for example, a ROM/RAM, a magnetic disk, or an optical disc), and includes several instructions for instructing an electronic device (which may be a mobile phone, a computer, a server, an air conditioner, a network device, or the like) to perform the methods described in the embodiments of the present invention.

The embodiments of the present invention are described with reference to the accompanying drawings. However, the present invention is not limited to the foregoing specific implementations. The foregoing specific implementations are merely examples, but are not limiting. A person of ordinary skill in the art may make many forms without departing from the objective and the scope of the claims of the present invention, and these forms all fall within the protection scope of the present invention.

## Claims

1. A method for obtaining exposure data, applied to an electronic device and comprising:
determining a scan synchronization signal corresponding to a target area on a display screen of the electronic device;
determining, based on the scan synchronization signal, a real-time screen-off area and movement parameter information of the real-time screen-off area;
determining, based on pixels occupied by the real-time screen-off area, the movement parameter information, and pixels occupied by the target area, a coverage duration for the real-time screen-off area to continuously cover the target area and a time interval between two coverages; and
controlling, based on the coverage duration and the time interval, a target photosensitive component in the electronic device to be exposed, so as to obtain exposure data, wherein
the target area is an area corresponding to the target photosensitive component on the display screen.

2. The method for obtaining exposure data according to claim 1, wherein the controlling, based on the coverage duration and the time interval, a target photosensitive component in the electronic device to be exposed, so as to obtain exposure data comprises:
controlling, based on the coverage duration, the time interval, and a target exposure duration required for the target photosensitive component, the target photosensitive component to be exposed, so as to obtain the exposure data.

3. The method for obtaining exposure data according to claim 2, wherein the controlling, based on the coverage duration, the time interval, and a target exposure duration required for the target photosensitive component, the target photosensitive component to be exposed, so as to obtain the exposure data comprises:
determining, in a case that the target exposure duration is greater than the coverage duration, a quantity of target exposures of the target photosensitive component based on the target exposure duration and the coverage duration; and
controlling, based on the quantity of target exposures, the target photosensitive component to be exposed, so as to obtain the exposure data, wherein
a total exposure duration of the target photosensitive component is not less than the target exposure duration.

4. The method for obtaining exposure data according to claim 3, wherein the controlling, based on the quantity of target exposures, the target photosensitive component to be exposed, so as to obtain the exposure data comprises:
controlling, based on the quantity of target exposures, the target photosensitive component to be exposed; and
obtaining the exposure data after the last exposure; or
controlling, based on the quantity of target exposures, the target photosensitive component to be exposed, and outputting, after each exposure, sub data obtained in this exposure; and
synthesizing, after the last exposure, the sub data to obtain the exposure data.

5. The method for obtaining exposure data according to claim 1, wherein the determining, based on pixels occupied by the real-time screen-off area, the movement parameter information, and pixels occupied by the target area, a coverage duration for the real-time screen-off area to continuously cover the target area and a time interval between two coverages comprises:
obtaining a reference area based on the target area; and
determining, based on the pixels occupied by the real-time screen-off area, the movement parameter information, and reference pixels occupied by the reference area, a coverage duration for the real-time screen-off area to continuously and completely cover the reference area and a time interval between two coverages, wherein
the reference area is larger than the target area, and the reference area is smaller than the real-time screen-off area.

6. An electronic device, comprising:
a first determining module, configured to determine a scan synchronization signal corresponding to a target area on a display screen of the electronic device;
a second determining module, configured to determine, based on the scan synchronization signal, a real-time screen-off area and movement parameter information of the real-time screen-off area;
a third determining module, configured to determine, based on pixels occupied by the real-time screen-off area, the movement parameter information, and pixels occupied by the target area, a coverage duration for the real-time screen-off area to continuously cover the target area and a time interval between two coverages; and
a first control module, configured to control, based on the coverage duration and the time interval, a target photosensitive component in the electronic device to be exposed, so as to obtain exposure data, wherein
the target area is an area corresponding to the target photosensitive component on the display screen.

7. The electronic device according to claim 6, wherein the first control module comprises:
a first control submodule, configured to control, based on the coverage duration, the time interval, and a target exposure duration required for the target photosensitive component, the target photosensitive component to be exposed, so as to obtain the exposure data.

8. The electronic device according to claim 7, wherein the first control submodule comprises:
a first determining unit, configured to determine, in a case that the target exposure duration is greater than the coverage duration, a quantity of target exposures of the target photosensitive component based on the target exposure duration and the coverage duration; and
a first control unit, configured to control, based on the quantity of target exposures, the target photosensitive component to be exposed, so as to obtain the exposure data, wherein
a total exposure duration of the target photosensitive component is not less than the target exposure duration.

9. The electronic device according to claim 8, wherein the first control unit comprises:
a first control subunit, configured to control, based on the quantity of target exposures, the target photosensitive component to be exposed; and
a first processing subunit, configured to obtain the exposure data after the last exposure; or
a second processing subunit, configured to: control, based on the quantity of target exposures, the target photosensitive component to be exposed, and output, after each exposure, sub data obtained in this exposure; and
a third processing subunit, configured to synthesize, after the last exposure, the sub data to obtain the exposure data.

10. The electronic device according to claim 6, wherein the third determining module comprises:
a first processing submodule, configured to obtain a reference area based on the target area; and
a first determining submodule, configured to determine, based on the pixels occupied by the real-time screen-off area, the movement parameter information, and reference pixels occupied by the reference area, a coverage duration for the real-time screen-off area to continuously and completely cover the reference area and a time interval between two coverages, wherein
the reference area is larger than the target area, and the reference area is smaller than the real-time screen-off area.

11. An electronic device, comprising a processor, a memory, and a computer program stored in the memory and executable on the processor, wherein when the computer program is executed by the processor, steps of the method for obtaining exposure data according to any one of claims 1 to 5 are implemented.

12. A computer-readable storage medium, wherein the computer-readable storage medium stores a computer program, and when the computer program is executed by a processor, steps of the method for obtaining exposure data according to any one of claims 1 to 5 are implemented.

13. A computer program product, wherein the computer program product is executed by at least one processor to implement the method for obtaining exposure data according to any one of claims 1 to 5.

14. An electronic device, configured to implement the method for obtaining exposure data according to any one of claims 1 to 5.
